(19) Europäisches Patentamt
European Patent Office
Office européen des brevets

(11) EP 2 746 326 B2

(12) **NEW EUROPEAN PATENT SPECIFICATION**
After opposition procedure

(45) Date of publication and mention of the opposition decision:
**12.06.2024 Bulletin 2024/24**

(45) Mention of the grant of the patent:
**29.11.2017 Bulletin 2017/48**

(21) Application number: **12198091.6**

(22) Date of filing: **19.12.2012**

(51) International Patent Classification (IPC):
***C08K 5/00*** *(2006.01)* ***C08L 23/10*** *(2006.01)*

(52) Cooperative Patent Classification (CPC):
**C08K 5/00; C08L 23/10;** C08L 23/142

# (54) AUTOMOTIVE COMPOUND WITH REDUCED TIGERSKIN

Automobilkomponente mit reduziertem Tigerfell

Composé automobile avec tigerskin réduite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.06.2014 Bulletin 2014/26**

(73) Proprietor: **Borealis AG**
**1020 Vienna (AT)**

(72) Inventors:
- **Lederer, Klaus**
  **4020 Linz (AT)**
- **Kastner, Erwin**
  **4040 Linz (AT)**

(74) Representative: **Maiwald GmbH**
**Elisenhof**
**Elisenstraße 3**
**80335 München (DE)**

(56) References cited:
**EP-A1- 2 036 977**
**EP-A1- 2 275 476**
**EP-A1- 2 275 485**
**EP-A1- 2 386 602**
**EP-A1- 2 433 982**
**EP-A1- 2 495 280**
**WO-A1-03/062316**
**WO-A1-2010/009825**
**WO-A1-2010/115878**
**WO-A1-2010/149549**
**WO-A1-2011/131579**
**WO-A1-2011/141380**
**US-A- 4 251 407**
**US-A1- 2010 160 518**

EP 2 746 326 B2

## Description

The present invention relates to a new polymer composition applicable for automotive compounds.

Heterophasic polypropylenes are widely used in the automobile industry, especially for bumper applications, since they combine good stiffness with improved impact strength behavior. A heterophasic polymer composition comprises an at least partly crystalline matrix and an amorphous phase dispersed therein. The matrix is usually a propylene polymer and the amorphous phase a propylene copolymer rubber. US 2010/160518 A1 relates to composition comprising a polyolefin resin (comprising a PP polymer (homo- or copolymer) and an elastomer, in the examples heterophase copolymers are used), a nucleator and a nucleator regulator (e.g. calcium salt). Automotive compounds comprising polypropylene are most commonly injection moulding articles, whereupon tigerskin is a common problem regarding the appearance of exterior as well as interior parts. It can be observed as a repetitive change of surface gloss that looks like tigerskin which is a result of critical injection moulding conditions, e.g. fast injection speed. The degree of tigerskin is usually measured by visual inspection and can be quantified by determination of the MSE value which is proportional to the degree of tigerskin, i.e. high MSE values represent high degrees of tigerskin.

Since the problem of tigerskin could not be solved in the past, it is an object of the present invention to provide a polymer composition which can be injection moulded to obtain automotive compounds showing reduced tigerskin.

Accordingly, the present invention relates to a polymer composition as defined in the to claims 1 to 5. The present invention also relates to an automotive article according to claim 7 comprising the above polymer composition.

The present invention further relates to a process as defined in claim 8.

A further aspect of the present invention is the use according to claim 6 of the above polymer composition in an automotive application.

In the following the invention will be described in more detail.

It is apparent from the wording used for the different polymers (H-PP1, HMF-PP and HDPE) according to the present invention that they must (chemically) differ from each other. The expression "heterophasic" indicates that an elastomeric copolymer is (finely) dispersed in a matrix. In other words the elastomeric copolymer forms inclusions in the matrix. Thus the matrix contains (finely) dispersed inclusions being not part of the matrix and said inclusions contain the elastomeric copolymer. The term "inclusion" according to this invention shall preferably indicate that the matrix and the inclusion form different phases within the heterophasic propylene copolymer, said inclusions are for instance visible by high resolution microscopy, like electron microscopy or scanning force microscopy. In case the composition comprises the high melt flow polypropylene (HMF-PP) being a heterophasic propylene copolymer and the high density polyethylene (HDPE), the final composition is probably of a complex structure. Probably the matrix of the heterophasic propylene copolymers form a continuous phase being the matrix of the composition wherein the elastomeric copolymers, and the high density polyethylene (HDPE) form together or individually inclusions dispersed therein.

Accordingly the polymer composition of the present invention comprises

(a) the heterophasic propylene copolymer (HPP-1) in an amount of 20 to 80 wt.-%, more preferably 30 to 60 wt.-%, still more preferably 35 to 45 wt.-%,
(b) the high melt flow polypropylene (HMF-PP) in an amount of 5 to 35 wt.-%, more preferably 10 to 30 wt.-%, like in an amount of 10 to 25 wt.-%,
(c) the high density polyethylene (HDPE) in an amount of 3 to 20 wt.-%, more preferably 5 to 15 wt.-%,
(d) the mineral filler (F) in an amount of 5 to 30 wt.-%, more preferably 10 to 25 wt.-%, and
(e) the earth alkali fatty acid salt (EAF) in an amount of 0.15 to 1.0 wt.-%, more preferably of 0.18 to 0.8 wt.-%, yet more preferably of 0.20 to 0.6 wt.-%, e.g. of 0.23 to 0.4 wt.-%

based on the total composition.

The reduction of tigerskin is preferably accomplished in case of MSE values below 30.0, more preferably 29.0, still more preferably 27.0.

The polymer composition according to the present invention may be prepared by compounding the components within suitable melt mixing devices for preparing polymeric compounds, including in particular extruders, like single screw extruders as well as twin screw extruders. Other suitable melt mixing devices include planet extruders and single screw co-kneaders. Especially preferred are twin screw extruders including high intensity mixing and kneading sections. Suitable melt temperatures for preparing the compositions are in the range from 170 to 300 °C, preferably in the range from 200 to 260 °C.

In the following the individual components are defined in more detail.

### Heterophasic propylene copolymer (HPP-1)

It is preferred that the heterophasic propylene copolymer (HPP-1) before mixed with the other components

mentioned herein comprises as polymer components only the polypropylene matrix (M1) and the elastomeric propylene copolymer (E1). In other words the heterophasic propylene copolymer (HPP-1) may contain further additives but no other polymer in an amount exceeding 7.5 wt.-%, more preferably exceeding 5 wt.-%, based on the total heterophasic propylene copolymer (HPP-1), more preferably based on the polymers present in the heterophasic propylene copolymer (HPP-1). One additional polymer which may be present in such low amounts is a polyethylene which is a reaction product obtained by the preparation of the heterophasic propylene copolymer (HPP-1). Accordingly it is in particular appreciated that a heterophasic propylene copolymer (HPP-1) as defined in the instant invention contains only a polypropylene matrix (M1), the elastomeric propylene copolymer (E1) and optionally a polyethylene in amounts as mentioned in this paragraph.

The polypropylene matrix (M1) of the heterophasic propylene copolymer (HPP-1) can be a propylene homopolymer or a propylene copolymer with comonomers selected from ethylene and/or $C_4$ to $C_{12}$ $\alpha$-olefins. Preferably, the polypropylene matrix (M1) of the heterophasic propylene copolymer (HPP-1) is a propylene homopolymer. Accordingly the xylene cold insoluble (XCI) fraction of the heterophasic propylene copolymer (HPP-1) represents the matrix (M1) being a propylene homopolymer and optionally the polyethylene whereas the xylene cold soluble (XCS) fraction represents the elastomeric part of the heterophasic propylene copolymer (HPP-1), i.e. the elastomeric propylene copolymer (E1).

The expression propylene homopolymer used in the instant invention relates to a polypropylene that consists substantially, i.e. of more than 99.7 wt.-%, still more preferably of at least 99.8 wt.-%, of propylene units. In a preferred embodiment only propylene units in the propylene homopolymer are detectable.

Accordingly the comonomer content of the polypropylene matrix (M1) is preferably equal or below 1.0 wt.-%, more preferably not more than 0.8 wt.-%, still more preferably not more than 0.5 wt.-%, like not more than 0.2 wt.-%, e.g. non detectable.

The polypropylene matrix (M1) of the heterophasic propylene copolymer (HPP-1) can be multimodal or bimodal in view of the molecular weight.

The expression "multimodal" or "bimodal" used throughout the present invention refers to the modality of the polymer, i.e.

- the form of its molecular weight distribution curve, which is the graph of the molecular weight fraction as a function of its molecular weight,
  and / or
- the form of its comonomer content distribution curve, which is the graph of the comonomer content as a function of the molecular weight of the polymer fractions.

Preferably the polypropylene matrix (M1), preferably the polypropylene matrix being a propylene homopolymer, i.e. the xylene cold insoluble (XCI) fraction, of the heterophasic propylene copolymer (HPP-1) has a melt flow rate $MFR_2$ (230 °C) in the range of 40 to 150 g/10 min, more preferably 50 to 110 g/10 min, still more preferably 70 to 100 g/10 min.

Preferably the xylene cold soluble content of the polypropylene matrix (M1) of the heterophasic propylene copolymer (HPP-1) is no higher than 10 wt.-%, more preferable no higher than 7 wt.-%, still more preferably no higher than 5 wt.-%. Still more preferably the xylene cold soluble content of the polypropylene matrix (M1) being a propylene homopolymer of the heterophasic propylene copolymer (HPP-1) is no higher than 4 wt.-%, more preferable no higher than 3 wt.-%, still more preferably no higher than 2 wt.-%.

Preferably the polypropylene matrix (M1) is isotactic. Accordingly it is appreciated that the polypropylene matrix (M1) has a rather high pentad concentration, i.e. higher than 80 %, more preferably higher than 85 %, yet more preferably higher than 90 %, still more preferably higher than 92 %, still yet more preferably higher than 93 %, like higher than 95 %.

One further essential component of the heterophasic propylene copolymer (HPP-1) is the elastomeric propylene copolymer (E1).

The elastomeric propylene copolymer (E1) comprises, preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric propylene copolymer (E-PP1) may additionally contain units derived from a conjugated diene, like butadiene, or a non-conjugated diene, however, it is preferred that the elastomeric propylene copolymer (E-PP1) consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly, the elastomeric propylene copolymer (E1) preferably comprises monomers copolymerizable with propylene, for example comonomers such as ethylene and/or $C_4$ to $C_{12}$ $\alpha$-olefins, in particular ethylene and/or $C_4$ to $C_{12}$ $\alpha$-olefins, e.g. 1-butene and/or 1-hexene. Preferably the elastomeric propylene copolymer (E1) comprises, especially consists of, monomers copolymerizable with propylene from the group consisting of ethylene, 1- butene and 1-hexene. More specifically the elastomeric propylene copolymer (E1) comprises - apart from propylene - units derivable from ethylene and/or 1-butene. Thus in a preferred embodiment the elastomeric propylene copolymer phase (E1) comprises units derivable from ethylene and propylene only.

In case the polypropylene matrix (M1) of the heterophasic propylene copolymer (HPP-1) is a propylene copolymer, it is preferred that the comonomer(s) of the polypropylene matrix (M1) and the elastomeric propylene copolymer (E1) are the same.

In one embodiment, the elastomeric propylene copolymer (E1) is bimodal or multimodal. More particularly, the elastomeric propylene copolymer (E1) is preferably bimodal or multimodal in view of the intrinsic viscosity and/or the comonomer distribution. Concerning the definition of unimodal and multimodal, like bimodal, it is referred to the definition above.

The heterophasic propylene copolymer (HPP-1) has a melt flow rate $MFR_2$ (230 °C) in the range of 5 to 50 g/10 min, still more preferably in the range of 10 to 30 g/10 min, yet more preferably in the range of 15 to 20 g/10 min.

The ethylene content in the heterophasic propylene copolymer (HPP-1) is 5 to 30 wt.-%, more preferably 10 to 28 wt.-%, more preferably 15 to 25 wt.-%, based on the total heterophasic propylene copolymer (HPP-1). The xylene cold soluble (XCS) content in the heterophasic propylene copolymer (HPP-1) is 10 to 50 wt.-%, more preferably 15 to 40 wt.-%, still more preferably 20 to 35 wt.-%, based on the total heterophasic propylene copolymer (HPP-1).

Preferably it is desired that the heterophasic propylene copolymer (HPP-1) shows improved impact behavior. Accordingly it is appreciated that the heterophasic propylene copolymer (HPP-1) has Charpy notched impact strength at 23 °C of at least 10 $kJ/m^2$, more preferably in the range of 10 to 70 $kJ/m^2$, still more preferably in the range of 20 to 50 $kJ/m^2$. Furthermore, the Charpy notched impact strength at -20 °C of the heterophasic propylene copolymer (HPP-1) is preferably at least 5 $kJ/m^2$, more preferably in the range of 5 to 15 $kJ/m^2$, still more preferably in the range of 6 to 10 $kJ/m^2$.

Further, also the flexural modulus of the heterophasic propylene copolymer (HPP-1) should be rather high. It is preferred that the flexural modulus of the heterophasic propylene copolymer (HPP-1) is at least 500 MPa, more preferably in the range of 500 to 1000 MPa, even more preferably of 600 to 900 MPa, still more preferably in the range of 700 to 800 MPa.

The heterophasic propylene copolymers as well their individual components (matrix and elastomeric copolymer) can be produced by blending different polymer types, i.e. of different molecular weight and/or comonomer content. However, it is preferred that the heterophasic propylene copolymers as well their individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

## High melt flow polypropylene (HMF-PP)

The polymer composition according to the present invention further comprises a high melt flow polypropylene (HMF-PP). Such a high melt flow propylene copolymer (HMF-PP) ensures that the final polypropylene composition is featured by a rather high melt flow.

The high melt flow rate polypropylene (HMF-PP) is a heterophasic propylene copolymer comprising

1. (a) a polypropylene matrix (M2) and
2. (b) an elastomeric copolymer (E2) comprising units derived from propylene and ethylene and/or $C_4$ to $C_{12}$ $\alpha$-olefins, preferably ethylene.

Accordingly the high melt flow polypropylene (HMF-PP) being a heterophasic polypropylene copolymer comprises as polymer components only the polypropylene matrix (M2) and the elastomeric propylene copolymer (E2). In other words the high melt flow polypropylene (HMF-PP)) may contain further additives but no other polymer in an amount exceeding 5 wt-%, more preferably exceeding 3 wt.-%, like exceeding 1 wt.-%, based on the total high melt flow polypropylene (HMF-PP), more preferably based on the polymers present in the high melt flow polypropylene (HMF-PP). One additional polymer which may be present in such low amounts is a polyethylene which is a reaction product obtained by the preparation of the high melt flow polypropylene (HMF-PP). Accordingly it is in particular appreciated that a high melt flow polypropylene (HMF-PP) as defined in the instant invention contains only a polypropylene matrix (M2), an

elastomeric propylene copolymer (E2) and optionally a polyethylene in amounts as mentioned in this paragraph. Further, throughout the present invention the xylene cold insoluble (XCI) fraction of the high melt flow polypropylene (HMF-PP) being a heterophasic polypropylene copolymer represents the matrix (M2) and optionally the polyethylene whereas the xylene cold soluble (XCS) fraction represents the elastomeric part of the high melt flow polypropylene (HMF-PP), i.e. the elastomeric propylene copolymer (E2).

Accordingly the polypropylene matrix (M2) content, i.e. the xylene cold insoluble (XCI) content, in the high melt flow polypropylene (HMF-PP) is preferably in the range of 80.0 to 93.0 wt.-%, more preferably in the range of 82.0 to 91.0 wt.-%, like 83.0 to 89.0 wt.-%. On the other hand the elastomeric propylene copolymer (E2) content, i.e. the xylene cold soluble (XCS) content, in the high melt flow polypropylene (HMF-PP) is preferably in the range of 7.0 to 20.0 wt.-%, more preferably in the range of 9.0 to 18.0 wt.-%, like 11.0 to 17.0 wt.-%.

Accordingly the elastomeric propylene copolymer (E2) content, i.e. the xylene cold soluble (XCS) content, in the high melt flow polypropylene (HMF-PP)) is rather low compared to the elastomeric propylene copolymer (E1) content, i.e. the xylene cold soluble (XCS) content, in the heterophasic propylene copolymer (HPP-1). Thus it is appreciated that the amount of xylene cold soluble (XCS) content of the heterophasic polypropylene (HPP-1) is higher, preferably at least 8.0 wt.-% higher, more preferably at least 11.0 wt.-% higher, compared to the xylene cold soluble (XCS) content of the heterophasic polypropylene (HMF-PP). Accordingly it is appreciated that following formula (I), preferably (Ia), is fulfilled

$$XCS\,(HPP\text{-}1) \geq 1.5 \times XCS\,(HMF\text{-}PP) \quad (I)$$

$$XCS\,(HPP\text{-}1) \geq 1.7 \times XCS\,(HMF\text{-}PP) \quad (Ia)$$

wherein

| | |
|---|---|
| XCS (HPP-1) | is the xylene soluble content given in weight percentage of the heterophasic propylene copolymer (HPP-1), and |
| XCS (HMF-PP) | is the xylene soluble content given in weight percentage of the heterophasic propylene copolymer (HMFPP2). |

Further, the polypropylene matrix (M2) is preferably propylene copolymer or a propylene homopolymer, the latter especially preferred.

Accordingly the comonomer content of the polypropylene matrix (M2) is equal or below 1.0 wt.-%, yet more preferably not more than 0.8 wt.-%, still more preferably not more than 0.5 wt.-%, like not more than 0.2 wt.-%.

As mentioned above the polypropylene matrix (M2) is preferably a propylene homopolymer.

In case the polypropylene matrix (M2) is a random propylene copolymer it is appreciated that the random propylene copolymer comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer according to this invention comprises, especially consists of, monomers copolymerizable with propylene from the group consisting of ethylene, 1-butene and 1-hexene. More specifically the random propylene copolymer of this invention comprises - apart from propylene - units derivable from ethylene and/or 1-butene. In a preferred embodiment the random propylene copolymer comprises units derivable from ethylene and propylene only.

Additionally it is appreciated that the propylene copolymer has preferably a comonomer content in the range of more than 0.3 to 1.0 wt.-%, more preferably in the range of more than 0.3 to 0.8 wt.-%, yet more preferably in the range of 0.3 to 0.7 wt.-%.

The polypropylene matrix (M2) of the high melt flow polypropylene (HMF-PP), preferably the polypropylene matrix (M2) being a propylene homopolymer, can be multimodal or bimodal in view of the molecular weight.

Further and preferably the polypropylene matrix (M2) has a rather high melt flow rate. As mentioned above when talking about the melt flow rate of the matrix of a heterophasic polypropylene the melt flow rate of the xylene cold insoluble (XCI) fraction of said heterophasic polypropylene is meant.

Accordingly, it is preferred that in the present invention the polypropylene matrix (M2), i.e. the xylene cold insoluble (XCI) fraction of the high melt flow polypropylene (HMF-PP) has an $MFR_2$ (230 °C) in a range of 100 to 1500 g/10 min, more preferably of 120 to 800 g/10 min, still more preferably of 150 to 500 g/10 min.

Preferably the polypropylene matrix (M2) is isotactic. Accordingly it is appreciated that the polypropylene matrix (M2) has a rather high pentad concentration, i.e. higher than 80 %, more preferably higher than 85 %, yet more preferably higher than 90 %, still more preferably higher than 92 %, still yet more preferably higher than 93 %, like higher than 95 %.

The second component of the high melt flow polypropylene (HMF-PP)) is the elastomeric propylene copolymer (E2).

The elastomeric propylene copolymer (E2) comprises, preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric propylene copolymer (E2) may additionally contain units derived from a conjugated diene, like butadiene, or a non-conjugated diene, however, it is preferred that the elastomeric copolymer consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric propylene copolymer (E2) comprises at least units derivable from propylene and ethylene and may comprise other units derivable from a further $\alpha$-olefin as defined in the previous paragraph. However, it is in particular preferred that elastomeric propylene copolymer (E2) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer and/or an ethylene propylene rubber as elastomeric copolymer (E2)is especially preferred, the latter most preferred.

Like the polypropylene matrix (M2) the elastomeric propylene copolymer (E2) can be unimodal or multimodal, like bimodal. Concerning the definition of unimodal and multimodal, like bimodal, it is referred to the definition above.

In the present invention the content of units derivable from propylene in the elastomeric propylene copolymer (E2) equates with the content of propylene detectable in the xylene cold soluble (XCS) fraction. Accordingly the propylene detectable in the xylene cold soluble (XCS) fraction ranges from 50.0 to 75.0 wt.-%, more preferably 55.0 to 70.0 wt.-%. Thus in a specific embodiment the elastomeric propylene copolymer (E2), i.e. the xylene cold soluble (XCS) fraction, comprises from 25.0 to 50.0 wt.-%, more preferably 30.0 to 45.0 wt.-%, units derivable from ethylene and/or $C_4$ to $C_{12}$. Preferably the elastomeric propylene copolymer (E2) is an ethylene propylene non-conjugated diene monomer polymer or an ethylene propylene rubber, the latter especially preferred, with a propylene and/or ethylene content as defined in this paragraph.

The high melt flow polypropylene (HMF-PP) has a melt flow rate $MFR_2$ (230 °C) of at least 60 g/10 min, preferably at least 75 g/10 min, more preferably of at least 90 g/10 min. As mentioned above, the melt flow rate $MFR_2$ (230 °C) of the high melt flow polypropylene (HMF-PP) is preferably higher than the melt flow rate $MFR_2$ (230 °C) of the heterophasic propylene copolymer (HPP-1).

The high melt flow polypropylene (HMF-PP) has a density, measured according to ISO 1138, of at least 890 $kg/m^3$, preferably at least 900 $kg/m^3$, more preferably from 900 to 915 $kg/m^3$.

Preferably the propylene content in the high melt flow polypropylene (HMF-PP) is 88.0 to 96.0 wt.-%, more preferably 90.0 to 94.0 wt.-%, based on the total high melt flow polypropylene (HMF-PP), more preferably based on amount of the polymer components of the high melt flow polypropylene (HMF-PP), yet more preferably based on the amount of the polypropylene matrix (M2) and the elastomeric propylene copolymer (E2) together. The remaining part constitute the comonomers different from propylene (ethylene and/or $C_4$ to $C_{12}$ $\alpha$-olefin), preferably constitutes ethylene.

As mentioned above, the matrix of the heterophasic propylene copolymer (HPP-1) and the matrix of the high melt flow polypropylene (HMF-PP) being a heterophasic propylene copolymer form a continuous phase wherein the elastomeric copolymers (E1) and (E2) and optionally the high density polyethylene (HDPE) are dispersed.

**High density polyethylene (HDPE)**

The polymer composition according to the present invention comprises a high density polyethylene (HDPE).

The high density polyethylene (HDPE) has a melt flow rate $MFR_2$ (190 °C) below 20 g/10 min, preferably below 10 g/10 min, more preferably below 5 g/10 min.

The high density polyethylene (HDPE) has a density of at least 940 $kg/m^3$, preferably 945 $kg/m^3$, more preferably in the range of 945 to 970 $kg/m^3$.

As mentioned above, the high density polyethylene (HDPE) is also dispersed in the matrix, i.e. in the polypropylene matrix (M1) of the heterophasic propylene copolymer (HPP-1) or, optionally, in the continuous phase formed by the polypropylene matrix (M1) of the heterophasic propylene copolymer and the polypropylene matrix (M2) of the high

melt flow polypropylene (HMF-PP).

**Mineral filler (F)**

In addition to the polymer components the polymer composition according to the present invention comprises a mineral filler in the amount of 5 to 30 wt.-% based on the total composition. Preferably the mineral filler (F) is a phyllosilicate, mica or wollastonite. Even more preferably the mineral filler (F) is selected from the group of mica, wollastonite, kaolinite, smectite, montmorillonite and talc. The most preferred mineral filler (F) is talc.

The mineral filler (F) preferably has an average particle size d50 in the range of 1 to 20 μm, more preferably in the range of 1 to 10 μm, still more preferably in the range of 1 to 5 μm.

Typically the mineral filler (F) has a cutoff particle size d95 [mass percent] of equal or below 20 μm, more preferably in the range of 2.5 to 10 μm, still more preferably in the range of 2.5 to 8 μm.

**Earth alkali fatty acid salt (EAF)**

As stated above a further essential finding of the present invention is that the polymer composition must comprise in a specific range an alkali earth fatty acid salt (EAF). Accordingly one requirement of the present invention is that the alkali earth fatty acid (EAF) salt is present in the polymer composition in an amount of 0.15 to 1.0 wt.-% based on the total polymer composition.

The alkali earth fatty acid salt (EAF) within the polymer composition of the present invention is used in comparatively high amount, however the amount of alkali earth fatty acid salt preferably shall not exceed values having negative impact on essential properties. Thus the amount of the alkali earth fatty acid salt in the polymer composition is in the range of 0.15 to 1.0 wt.-%, more preferably in the range of 0.18 to 0.8 wt.-%, like in the range of 0.20 to 0.6 wt.-%, e.g. in the range of 0.23 to 0.4 wt.-%.

The alkali earth fatty acid salt is preferably an alkali earth salt of a $C_{12}$ to $C_{25}$ fatty acid, more preferably an alkali earth salt of a $C_{14}$ to $C_{24}$ fatty acid, still more preferably an alkali earth salt of a $C_{18}$ to $C_{22}$ fatty acid, like an alkali earth salt of a $C_{18}$ fatty acid.

Further it is appreciated that the alkali earth fatty acid salt is an alkali earth salt of a saturated fatty acid, in particular of a non-branched saturated fatty acid, as defined in the previous paragraph.

The alkali earth element of the alkali earth fatty acid salt is preferably magnesium or calcium, the latter being especially preferred.

Accordingly in a specific embodiment the alkali earth fatty acid salt is a calcium $C_{14}$ to $C_{24}$ fatty acid salt, more preferably a calcium saturated $C_{14}$ to $C_{24}$ fatty acid salt, still more preferably a calcium non-branched $C_{14}$ to $C_{24}$ fatty acid salt, like calcium stearate.

**Further components**

The instant polymer composition may comprise typical additives, like antioxidants (AO), slip agents (SA), hindered amine light stabilizers (HALS) and pigments. Preferably the amount of additives excluding the mineral filler (F) and the earth alkali fatty acid salt (EAF) shall not exceed 15 wt.-%, more preferably 10 wt. -%, still more preferably 8 wt.-% within on the total composition.

All components used for the preparation of the instant composition are known. Accordingly also their preparation is well known. For instance the heterophasic polypropylenes according to this invention are preferably produced in a multistage process known in the art, wherein the matrix is produced at least in one slurry reactor and subsequently the elastomeric copolymer is produced at least in one gas phase reactor.

Thus, the polymerization system can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably the process comprises also a prepolymerisation with the chosen catalyst system, as described in detail below, comprising the Ziegler-Natta procatalyst, the external donor and the cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction

mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerization stages. Also in such cases it is necessary to introduce so much cocatalyst into the prepolymerisation stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic polypropylenes of the invention comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315. They are incorporated herein by reference.

A further suitable slurry-gas phase process is the Spheripol® process of Basell.

Preferably the heterophasic polypropylene composition according to this invention are produced by using a special Ziegler-Natta procatalyst in combination with a special external donor, as described below in detail, preferably in the Spheripol® or in the Borstar®-PP process.

One preferred multistage process may therefore comprise the steps of:

- producing a polypropylene matrix in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,
- transferring the slurry reactor product into at least one first gas phase reactor, like one gas phase reactor or a first and a second gas phase reactor connected in series,
- producing an elastomeric copolymer in the presence of the polypropylene matrix and in the presence of the catalyst system in said at least first gas phase reactor,
- recovering the polymer product for further processing.

With respect to the above-mentioned preferred slurry-gas phase process, the following general information can be provided with respect to the process conditions.

Temperature is preferably from 40 to 110 °C, preferably between 50 and 100 °C, in particular between 60 and 90 °C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic polypropylenes are preferably obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

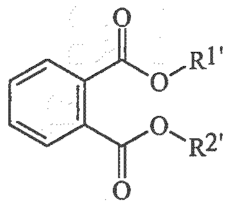

(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.
First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.
The adduct, which is first melted and then spray crystallized or emulsion solidified, is used as catalyst carrier.
In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^1$ and $R^{2'}$ being independently at least a $C_5$-alkyl, like at least a $C_8$-alkyl, or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

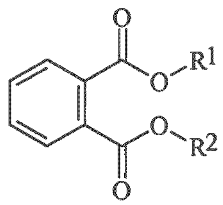

(II)

  with $R^1$ and $R^2$ being methyl or ethyl, preferably ethyl,
  the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

In a further embodiment, the Ziegler-Natta procatalyst can be modified by polymerising a vinyl compound in the presence of the catalyst system, comprising the special Ziegler-Natta procatalyst, an external donor and a cocatalyst, which vinyl compound has the formula:

$$CH_2=CH-CHR^3R^4$$

wherein $R^3$ and $R^4$ together form a 5 -or 6-membered saturated, unsaturated or aromatic ring or independently represent an alkyl group comprising 1 to 4 carbon atoms, and the modified catalyst is used for the preparation of the heterophasic polypropylene composition according to this invention. The polymerized vinyl compound can act as an $\alpha$-nucleating agent. This modification is in particular used for the preparation of the heterophasic polypropylene (H-PP1).

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

For the production of the heterophasic polypropylenes according to the invention, the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad \text{(IIIa)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \qquad \text{(IIIb)}$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (IIIb) is diethylaminotriethoxysilane .

Most preferably the external donor is of formula (IIIa), like dicyclopentyl dimethoxy silane $[Si(OCH_3)_2(cyclopentyl)_2]$ or diisopropyl dimethoxy silane $[Si(OCH_3)_2(CH(CH_3)_2)_2]$.

For mixing the individual components of the instant composition, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive composition.

Accordingly the present invention is also directed to a process for the preparation of the instant composition comprising the steps of adding the polymer components with, inter alia the polypropylene (PP), with the mineral filler (F), and optionally other additives to an extruder (as mentioned above) and extruding the same obtaining thereby said

polypropylene composition.

The polypropylene composition according to the invention may be pelletized and compounded using any of the variety of compounding and blending methods well known and commonly used in the resin compounding art.

**Articles made from the polymer composition**

**Uses according to the invention**

The current invention also provides (automotive) articles, like injection molded articles, comprising at least to 60 wt.-%, more preferably at least 80 wt.-%, yet more preferably at least 95 wt.-%, like consisting, of the inventive polymer composition. Accordingly the present invention is especially directed to automotive articles, especially to car interiors and exteriors, like bumpers, side trims, step assists, body panels, spoilers, dashboards, interior trims and the like, in particular bumpers, comprising at least to 60 wt.-%, more preferably at least 80 wt.-%, yet more preferably at least 95 wt.-%, like consisting, of the inventive polymer composition.

The polymer composition of the present invention is preferably used for automotive articles, like moulded automotive articles, preferably automotive injection moulded articles. Even more preferred is the use for car interiors and exteriors, like bumpers, side trims, step assists, body panels, spoilers, dashboards, interior trims and the like, especially bumpers.

Concerning the preferred embodiments of the polymer composition and its components reference is made to the information provided above.

The present invention will now be described in further detail by the examples provided below.

**EXAMPLES**

The following definitions of terms and determination methods apply for the above general description of the invention as well as to the below examples unless otherwise defined.

**1. Definitions/Measuring Methods**

The following definitions of terms and determination methods apply for the above general description of the invention as well as to the below examples unless otherwise defined.

**Density** is measured according to ISO 1183-1 - method A (2004). Sample preparation is done by compression moulding in accordance with ISO 1872-2:2007.

**$MFR_2$ (230 °C)** is measured according to ISO 1133 (230 °C, 2.16 kg load).

**$MFR_2$ (190 °C)** is measured according to ISO 1133 (190 °C, 2.16 kg load).

**NMR-spectroscopy measurements:**

The $^{13}C$-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Quantification of comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polyethylene copolymer is determined using the baseline corrected peak area of the quantitative bands found at 1377-1379 $cm^{-1}$. Quantitative results are obtained based upon reference to the film thickness.

**Intrinsic viscosity** is measured according to DIN ISO 1628/1, October 1999 (in Decalin at 135 °C).

**Flexural Modulus and flexural strength** were determined in 3-point-bending according to ISO 178 on injection molded specimens of 80 x 10 x 4 mm prepared in accordance with ISO 294-1:1996.

**Charpy impact test:** The Charpy notched impact strength (Charpy NIS) is measured according to ISO 179

1eA at 23 °C and -20 °C, using injection molded bar test specimens of 80x10x4 mm prepared in accordance with ISO 294-1:1996.

**Median particle size d50 (Sedimentation)** is calculated from the particle size distribution [mass percent] as determined by gravitational liquid sedimentation according to ISO 13317-3 (Sedigraph)
**Cutoff particle size d95 (Sedimentation)** is calculated from the particle size distribution [mass percent] as determined by gravitational liquid sedimentation according to ISO 13317-3 (Sedigraph)

**The xylene solubles (XCS, wt.-%):** Content of xylene cold solubles (XCS) is determined at 25 °C according ISO 16152; first edition; 2005-07-01, the remaining insoluble part is the xylene cold insoluble (XCI) fraction.

**Flow marks (Tigerskin)**

The tendency to show flow marks was examined with a method as described below. This method is described in detail in WO 2010/149529, which is incorporated herein in its entirety.
An optical measurement system, as described by Sybille Frank et al. in PPS 25 Intern. Conf. Polym. Proc. Soc 2009 or Proceedings of the SPIE, Volume 6831, pp 68130T-68130T-8 (2008) was used for characterizing the surface quality.
This method consists of two aspects:

1. 1. Image recording:
The basic principle of the measurement system is to illuminate the plates with a defined light source (LED) in a closed environment and to record an image with a CCD-camera system.
2. 2. Image analysis:
The specimen is floodlit from one side and the upwards reflected portion of the light is deflected via two mirrors to a CCD-sensor. The such created grey value image is analyzed in lines. From the recorded deviations of grey values the mean square error (MSE) is calculated allowing a quantification of surface quality, i.e. the larger the MSE value the more pronounced is the surface defect.

Generally, for one and the same material, the tendency to flow marks increases when the injection speed is increased.
For this evaluation plaques 210x148x3mm$^3$ with grain VW K50 and a filmgate of 1.4 mm were used and were produced with a injection speed using screw injection speeds of 140 mm/sec (MSE 1).

Further conditions:

Melt temperature: 240°C
Mould temperature 30°C
Dynamic pressure: 10 bar hydraulic

The smaller the MSE value is at a certain injection speed, the smaller is the tendency for flow marks.

**2. Examples**

**Table 1:** The polypropylene copolymers used

| | | HPP-1 | HMF-PP |
|---|---|---|---|
| MFR | [g/10min] | 18 | 100.0 |
| MFR of XCI | [g/10min] | 100 | 160 |
| XCS | [wt%] | 29.0 | 15 |
| C2 total | [wt%] | 20.0 | 8.0 |
| C2 in XCS | [wt%] | 52 | 39 |

(continued)

| | | HPP-1 | HMF-PP |
|---|---|---|---|
| IV of XCS | [dl/g] | 2.4 | 1.9 |

**Table 2:** Inventive and Comparative Examples

| Example* | | IE | CE |
|---|---|---|---|
| HPP-1 | [wt%] | 37.39 | 37.64 |
| Talc | [wt%] | 20.00 | 20.00 |
| Calcium stearate | [wt%] | 0.25 | - |
| HMF-PP | [wt%] | 28.00 | 28.00 |
| HDPE | [wt%] | 7.00 | 7.00 |
| MSE (1.5 s Injection Time) | [-] | 26.5 | 33.5 |
| Rest to 100wt.-% are additives, like antioxidants and pigments | | | |

**"HPP-1"** is the commercial product EF015AE of Borealis AG.
**"Talc"** is the commercial talc Steamic T1 CA of Imerys Talc Austria GmbH, having a cutoff particle size ($d_{95}$) of 6.2 μm.
**"HMF-PP"** is the commercial product BJ356MO of Borealis AG.
**"HDPE"** is the commercial product BS2581 of Borealis AG having a $MFR_2$ (190 °C/2.16kg) of 0.3 g/10 min and a density of 958 kg/m$^3$.

## Claims

**1.** Polymer composition, comprising

(a) 20 to 80 wt.-%, based on the total composition, of a heterophasic propylene copolymer (HPP-1), comprising

- a polypropylene matrix (M1) and
- an elastomeric propylene copolymer (E1)

(b) 5 to 35 wt.-%, based on the total composition, of a high melt flow polypropylene (HMF-PP) being a heterophasic propylene copolymer comprising

- a polypropylene matrix (M2) and
- an elastomeric copolymer (E2) comprising units derived from propylene and ethylene and/or $C_4$ to $C_{12}$ α-olefins,

(c) 3 to 20 wt.-%. based on the total composition, of a high density polyethylene (HDPE);
(d) 5 to 30 wt.-%, based on the total composition, of a mineral filler (F), and
(e) 0.15 to 1.0 wt.-%, based on the total composition, of an earth alkali fatty acid salt (EAF),

wherein

the heterophasic propylene copolymer (HPP-1) has

(i) a melt flow rate $MFR_2$ (230 °C) measured according to ISO 1133 in the range of 5 to 50 g/10 min,
(ii) a total ethylene content of 5 to 30 wt.-%, and
(iii) a total xylene cold soluble (XCS) content determined at 25 °C according to ISO 16152 of 10 to 50 wt.-%,
wherein further
the high melt flow polypropylene (HMF-PP) has

(iv) a melt flow rate $MFR_2$ (230 °C) measured according to ISO 1133 of at least 60 g/10 min and
(v) a density measured according to ISO 1183 of at least 890 kg/$m^3$.

and wherein still further the high density polyethylene (HDPE) has

(vi) a melt flow rate $MFR_2$ (190 °C) measured according to ISO 1133 below 20 g/10 min, and
(vii) a density measured according to ISO 1183 of at least 940 kg/$m^3$.

**2.** Polymer composition according to claim 1, wherein the said earth alkali fatty acid salt (EAF) is selected from magnesium and/or calcium salts of $C_{12}$ to $C_{26}$ fatty acids.

**3.** Polymer composition according to any one of the preceding claims, wherein the elastomeric propylene copolymer (E1) comprises a fraction (A) and a fraction (B), wherein said fraction (A) has a lower comonomer content and/or a different intrinsic viscosity than fraction (B).

**4.** Polymer composition according to any one of the preceding claims, wherein the polypropylene matrix (M1) of the heterophasic propylene copolymer (H-PP1) has

(a) a melt flow rate $MFR_2$ (230 °C) measured according to ISO 1133 in the range of 40 to 150 g/10 min and
(b) a xylene cold soluble (XCS) content no higher than 5 wt.-%.

**5.** Polymer composition according to any one of the preceding claims, wherein the mineral filler (F) is talc, preferably said talc has a cutoff particle size d95 of equal or below 20 μm.

**6.** Use of a polymer composition according to any one of the preceding claims 1 to 5 as an automotive article.

**7.** Automotive article comprising a polymer composition according to any one of the preceding claims 1 to 5.

**8.** Process for producing a polymer composition according to any one of the preceding claims 1 to 5 comprising the step of mixing up the heterophasic propylene copolymer (HPP-1), the mineral filler (F), the earth alkali fatty acid salt (EAF) and the high melt flow polypropylene (HMF-PP) and high density polyethylene (HDPE) in an extruder.

## Patentansprüche

**1.** Polymer-Zusammensetzung, umfassend

(a) 20 bis 80 Gew.-%, basierend auf der Gesamt-Zusammensetzung, eines heterophasischen Propylen-Copolymers (HPP-1), umfassend

(i) eine Polypropylen-Matrix (M1) und
(ii) ein elastomeres Propylen-Copolymer (E1)

(b) 5 bis 35 Gew.-%, basierend auf der Gesamt-Zusammensetzung, eines Polypropylens mit hohem Schmelz-Fluss (HMF-PP), das ein heterophasisches Propylen-Copolymer ist, umfassend

- eine Polypropylen-Matrix (M2) und
- ein elastomeres Copolymer (E2), umfassend Einheiten, abgeleitet von Propylen und Ethylen und/oder $C_4$ bis $C_{12}$ α-Olefinen,

(c) 3 bis 20 Gew.-%, basierend auf der Gesamt-Zusammensetzung, eines Polyethylens mit hoher Dichte (HDPE),
(c) 5 bis 30 Gew.-%, basierend auf der Gesamt-Zusammensetzung, eines Mineral-Füllstoffs (F) und
(d) 0,15 bis 1,0 Gew.-%, basierend auf der Gesamt-Zusammensetzung, eines Erdalkali-Fettsäure-Salzes (EAF) ;

wobei
das heterophasische Propylen-Copolymer (H-PP1) aufweist

(i) eine Schmelze-Fließ-Rate $MFR_2$ (230°C), gemessen gemäß ISO 1133, in dem Bereich von 5 bis 50 g/10 min,
(ii) einen Ethylen-Gesamt-Gehalt von 5 bis 30 Gew.-%, und
(iii) einen in kaltem Xylol löslichen Gesamt-Gehalt (XCS), bestimmt bei 25°C gemäß ISO 16152, von 10 bis 50 Gew.-%
wobei weiterhin
das Polypropylen mit hohem Schmelz-Fluss (HMF-PP) aufweist
(iv) eine Schmelze-Fließ-Rate $MFR_2$ (230°C), gemessen gemäß ISO 1133, von mindestens 60 g/10 min,
(v) eine Dichte, gemessen gemäß ISO 1183, von mindestens 890 $kg/m^3$

und wobei noch weiterhin
das Polyethylen mit hoher Dichte (HDPE) aufweist

(vi) eine Schmelze-Fließ-Rate $MFR_2$ (190°C), gemessen gemäß ISO 1133, unter 20 g/10 min und
(vii) eine Dichte, gemessen gemäß ISO 1183, von mindestens 940 $kg/m^3$.

**2.** Polymer-Zusammensetzung nach Anspruch 1, wobei das Erdalkali-Fettsäure-Salz (EAF) ausgewählt ist aus Magnesium- und/oder Calcium-Salzen von $C_{12}$ bis $C_{26}$ Fettsäuren.

**3.** Polymer-Zusammensetzung nach einem der vorangehenden Ansprüche, wobei das elastomere Propylen-Copolymer (E1) eine Fraktion (A) und eine Fraktion (B) umfasst, wobei die Fraktion (A) einen geringeren Comonomer-Gehalt und/oder eine andere Grenz-Viskosität als Fraktion (B) aufweist.

**4.** Polymer-Zusammensetzung nach einem der vorangehenden Ansprüche, wobei die Polypropylen-Matrix (M1) von dem heterophasischen Propylen-Copolymer (H-PP1) aufweist

(a) eine Schmelze-Fließ-Rate $MFR_2$ (230°C), gemessen gemäß ISO 1133, in dem Bereich von 40 bis 150 g/10 min und
(b) einen in kaltem Xylol löslichen Gehalt (XCS) nicht höher als 5 Gew.-%.

**5.** Polymer-Zusammensetzung nach einem der vorangehenden Ansprüche, wobei der Mineral-Füllstoff (F) Talkum ist, vorzugsweise wobei das Talkum eine Cutoff-Teilchen-Größe d95 gleich oder unter 20 $\mu$m aufweist.

**6.** Verwendung einer Polymer-Zusammensetzung nach einem der vorangehenden Ansprüche 1 bis 5 als ein Kraftfahrzeug-Gegenstand.

**7.** Kraftfahrzeug-Gegenstand, umfassend eine Polymer-Zusammensetzung nach einem der vorangehenden Ansprüche 1 bis 5.

**8.** Verfahren zur Herstellung einer Polymer-Zusammensetzung nach einem der vorangehenden Ansprüche 1 bis 5, umfassend den Schritt des Vermischens des heterophasischen Propylen-Copolymers (HPP-1), des Mineral-Füllstoffs (F), des Erdalkali-Fettsäure-Salzes (EAF) und des Polypropylens mit hohem Schmelz-Fluss (HMF-PP) und des Polyethylens mit hoher Dichte (HDPE) in einem Extruder.

## Revendications

**1.** Composition de polymère comprenant

(a) 20 à 80 % en poids, par rapport à la composition totale, d'un copolymère de propylène hétérophasique (HPP-1), comprenant

- une matrice de polypropylène (M1) et
- un copolymère de propylène élastomère (E1),

(b) 5 à 35 % en poids, par rapport à la composition totale, d'un polypropylène présentant un indice de fluage élevé (HMF-PP) qui est un copolymère de propylène hétérophasique comprenant

- une matrice de polypropylène (M2) et

- un copolymère élastomère (E2) comprenant des motifs dérivés du propylène et de l'éthylène et/ou d' $\alpha$-oléfines en $C_4$ à $C_{12}$,

(c) 3 à 20 % en poids, par rapport à la composition totale, d'un polyéthylène haute densité (HDPE) ;
(d) 5 à 30 % en poids, par rapport à la composition totale, d'une charge minérale (F) et
(e) 0,15 à 1,0 % en poids, par rapport à la composition totale, d'un sel de métal alcalino-terreux d'acide gras (EAF) ;

dans laquelle
le copolymère de propylène hétérophasique (H-PP1) présente

(i) un indice de fluage $MFR_2$ (230 °C), mesuré conformément à la norme ISO 1133, situé dans la plage allant de 5 à 50 g/10 min,
(ii) une teneur totale en éthylène de 5 à 30 % en poids, et
(iii) une teneur totale en composés solubles dans le xylène froid (XCS), déterminée à 25 °C conformément à la norme ISO 16152, de 10 à 50 % en poids,
dans laquelle en outre
le polypropylène présentant un indice de fluage élevé (HMF-PP) présente
(iv) un indice de fluage $MFR_2$ (230 °C), mesuré conformément à la norme ISO 1133, d'au moins 60 g/10 min et
(v) une masse volumique, mesurée conformément à la norme ISO 1183, d'au moins 890 kg/$m^3$,

et dans laquelle encore en outre
le polyéthylène haute densité (HDPE) présente

(vi) un indice de fluage $MFR_2$ (190 °C), mesuré conformément à la norme ISO 1133, inférieur à 20 g/10 min, et
(vii) une masse volumique, mesurée conformément à la norme ISO 1183, d'au moins 940 kg/$m^3$.

**2.** Composition de polymère selon la revendication 1, dans laquelle ledit sel de métal alcalino-terreux d'acide gras (EAF) est sélectionné parmi les sels de magnésium et/ou de calcium d'acides gras en $C_{12}$ à $C_{26}$.

**3.** Composition de polymère selon l'une quelconque des revendications précédentes, dans laquelle le copolymère de propylène élastomère (E1) comprend une fraction (A) et une fraction (B), dans laquelle ladite fraction (A) présente une teneur en comonomère plus basse et/ou une viscosité intrinsèque différente par rapport à la fraction (B).

**4.** Composition de polymère selon l'une quelconque des revendications précédentes, dans laquelle la matrice de polypropylène (M1) du copolymère de propylène hétérophasique (H-PP1) présente

(a) un indice de fluage $MFR_2$ (230 °C), mesuré conformément à la norme ISO 1133, situé dans la plage allant de 40 à 150 g/10 min et
(b) une teneur en composés solubles dans le xylène froid (XCS) ne dépassant pas 5 % en poids.

**5.** Composition de polymère selon l'une quelconque des revendications précédentes, dans laquelle la charge minérale (F) est du talc, de préférence ledit talc présente une granulométrie de séparation d95 inférieure ou égale à 20 $\mu$m.

**6.** Utilisation d'une composition de polymère selon l'une quelconque des revendications précédentes 1 à 5 comme article d'automobile.

**7.** Article d'automobile comprenant une composition de polymère selon l'une quelconque des revendications précédentes 1 à 5.

**8.** Procédé de production d'une composition de polymère selon l'une quelconque des revendications précédentes 1 à 5, comprenant l'étape consistant à mélanger le copolymère de propylène hétérophasique (HPP-1), la charge minérale (F), le sel de métal alcalino-terreux d'acide gras (EAF) et le polypropylène présentant un indice de fluage élevé (HMF-PP) et le polyéthylène haute densité (HDPE) dans une extrudeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010160518 A1
- EP 0887379 A1
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- WO 2010149529 A


### Non-patent literature cited in the description


- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- **SYBILLE FRANK et al.** *PPS 25 Intern. Conf. Polym. Proc. Soc 2009 or Proceedings of the SPIE,* 2008, vol. 6831, 68130T-68130T, 8